# EUROPÄISCHE PATENTSCHRIFT

(11) **EP 4 119 909 B1**
(45) Veröffentlichungstag und Bekanntmachung des Hinweises auf die Patenterteilung: **21.02.2024**
(21) Anmeldenummer: 21185348.6
(22) Anmeldetag: 13.07.2021
(51) Int. Cl.: G01K 1/024, G01K 1/02, G01K 7/16, G01K 7/42

(54) **SPEISENTHERMOMETER UND VERFAHREN FÜR EINE SPEISENZUBEREITUNG**
FOOD THERMOMETER AND METHOD FOR FOOD PREPARATION
THERMOMÈTRE ALIMENTAIRE ET PROCÉDÉ DE PRÉPARATION DES ALIMENTS

(43) Veröffentlichungstag der Anmeldung: 18.01.2023
(73) Patentinhaber: Vorwerk & Co. Interholding GmbH, 42270 Wuppertal (DE)
(72) Erfinder: Stein, Matthias, 45472 Mühlheim an der Ruhr (DE); Lang, Torsten, 42657 Solingen (DE); Beckmann, Nils, 42853 Remscheid (DE)
(74) Vertreter: Gille Hrabal Partnerschaftsgesellschaft mbB Patentanwälte

(56) Entgegenhaltungen:
- EP-A2- 2 026 632
- WO-A1-2012/084588
- WO-A2-02/47522
- DE-A1-102012 217 357

## Beschreibung

Die Erfindung betrifft ein Speisenthermometer und ein Verfahren für die Zubereitung einer Speise mit Hilfe eines Speisenthermometers.

Ein Speisenthermometer ist ein Temperaturmessgerät, welches dafür bestimmt und geeignet ist, Temperaturen in einer Speise während der Zubereitung der Speise zu messen. Ein Speisenthermometer kann daher Temperaturen messen, die bei der Zubereitung einer Speise auftreten können. Deutlich davon abweichende Temperaturen können nicht gemessen werden. Außerdem ist ein Speisenthermometer den Umgebungsbedingungen gewachsen, die während einer Zubereitung einer Speise auftreten können.

In der Regel werden bei der Zubereitung einer Speise Temperaturen von weniger als 200°C erreicht. Es können aber auch Temperaturen von 350°C erreicht werden, so zum Beispiel für das Backen einer Pizza. Temperaturen von mehr als 350°C werden grundsätzlich nicht überschritten. Ein Speisenthermometer im Sinne der vorliegenden Erfindung ist daher so eingerichtet, dass Temperaturen oberhalb von 400°C, vorzugsweise oberhalb von 300°C, besonders bevorzugt oberhalb von 250°C, nicht mehr gemessen werden können. Grundsätzlich ist das Speisenthermometer so eingerichtet, dass dieses in einem herkömmlichen Backofen eingesetzt werden kann, also bei Temperaturen von bis zu 250°C.

Ein Speisenthermometer im Sinne der vorliegenden Erfindung ist nicht so ausgelegt, dass sehr tiefe Temperaturen damit gemessen werden können wie zum Beispiel Temperaturen unterhalb von Minustemperaturen, wie diese in haushaltsüblichen Gefriertruhen oder Gefrierschränken erreicht werden. Ein Speisenthermometer im Sinne der vorliegenden Erfindung ist daher nicht so ausgelegt, dass es Temperaturen von weniger als -70°C messen kann. Grundsätzlich ist ein Speisenthermometer im Sinne der vorliegenden Erfindung so ausgelegt, dass es Temperaturen unterhalb von -50°C nicht mehr messen kann, weil Speisen in der Regel unter Zufuhr von Wärme hergestellt werden und sehr tiefe Temperaturen lediglich für ein Einfrieren einer Speise angewendet werden.

Ein Speisenthermometer im Sinne der vorliegenden Erfindung kann einer Dampfatmosphäre widerstehen. Ein Speisenthermometer ist daher grundsätzlich wasserdicht gekapselt. Ein Speisenthermometer im Sinne der vorliegenden Erfindung ist resistent gegenüber üblichen Zutaten einer Speise wie zum Beispiel Säure von Zitronen oder Essig.

Um einer Speise für eine Zubereitung Wärme zuführen zu können, können gemäß der vorliegenden Erfindung Küchengeräte mit einer Heizeinrichtung wie zum Beispiel Ofen oder Pizzaofen, Mikrowelle, Dampfgarer, Kochstelle mit Kochgefäß, Küchenmaschine oder Grill eingesetzt werden. Als Heizeinrichtung kann aber auch ein Heizkörper dienen, der für ein Erwärmen eines Raums vorgesehen ist und der folglich nicht Teil eines Küchengeräts ist.

Beispiele für eine Speise, der erfindungsgemäß Wärme zugeführt werden kann, sind Fleisch, Gemüse, Aufläufe oder Teig für Backwaren.

Es gibt Küchengeräte wie zum Beispiel die Küchenmaschine Thermomix^{®}, die die Temperatur in einem Speisenzubereitungsgefäß messen und steuern können, um Gargut für eine Speisenzubereitung geeignet zu erhitzen. Temperaturen in einer Speise können aber durch ein solches Küchengerät nicht sehr genau gemessen werden.

Es gibt Fleischthermometer, also Speisenthermometer, die zum Teil beispielsweise in Fleisch hineingesteckt werden können und sollen, um die Temperatur innerhalb von Fleisch während seiner Zubereitung genau bestimmen zu können. Ein solches Speisenthermometer weist grundsätzlich ein spitzes Ende auf, um leicht in eine Speise hineingesteckt werden zu können.

Speisenthermometer mit mehreren separaten Temperatursensoren, beispielsweise in Form von elektrischen Widerständen, mit denen jeweils die Temperatur an unterschiedlichen Positionen des Thermometers ermittelt werden kann, sind aus den Druckschriften DE 10 2012 217 357 A1, EP 2 026 632 A2, WO 02/47522 A2 und WO 2012 7 084 588 A1 bekannt.

Es ist Aufgabe der vorliegenden Erfindung, die Temperatur in einer Speise während der Zubereitung genau messen zu können. Außerdem ist es ein Ziel der vorliegenden Erfindung, eine Speise dadurch verbessert zubereiten zu können.

Zur Lösung der Aufgabe dient ein Speisenthermometer mit den Merkmalen von Anspruch 1 und ein Verfahren mit den Merkmalen von Anspruch 12.

Vorteilhafte Ausgestaltungen ergeben sich aus den abhängigen Ansprüchen.

Das Speisenthermometer ist ein Widerstandsthermometer. Ein Widerstandsthermometer ist so eingerichtet, dass ein elektrischer Widerstand eines elektrischen Leiters zwischen zwei Messpunkten des Widerstandsthermometers ermittelt wird. Der ermittelte elektrische Widerstand ist ein Maß für die Temperatur, weil der elektrische Widerstand von der Temperatur abhängt. Der ermittelte elektrische Widerstand kann daher in eine Temperatur umgerechnet werden. Mit der Ermittlung des elektrischen Widerstands ist gemeint, dass durch Bestimmung der elektrischen Spannung und/oder des elektrischen Stroms zumindest ein Maß für den Widerstand ermittelt wird. Es kann beispielsweise eine konstante Spannung angelegt werden und der durch den elektrischen Leiter hindurchfließende Strom als Maß für den Widerstand gemessen werden. Es kann der Stromfluss konstant gehalten werden und die sich mit der Temperatur ändernde Spannung als Maß für den sich ändernden Widerstand gemessen werden.

Für den elektrischen Leiter sind eine Mehrzahl von Messpunkten zur Ermittlung einer Mehrzahl von Temperaturen vorhanden. Zwischen zwei Messpunkten kann der elektrische Widerstand des elektrischen Leiters ermittelt werden.

Es sind wenigstens drei Messpunkte vorhanden. Durch das Speisenthermometer können daher wenigstens zwei Temperaturen ermittelt werden, die an zwei verschiedenen Stellen des Speisenthermometers vorliegen. Temperaturen können also räumlich aufgelöst gemessen werden. Es ist daher möglich, innerhalb einer Speise wenigstens zwei verschiedene Temperaturen an zwei verschiedenen Stellen innerhalb der Speise ermitteln zu können. Mit dem Speisenthermometer ist es auch möglich, eine Temperatur in einer Speise sowie zugleich die Umgebungstemperatur zu messen.

Da das anspruchsgemäße Widerstandsthermometer wenigstens drei Messpunkte umfasst, können verschiedene elektrische Widerstände und damit mehrere verschiedene Temperaturen ermittelt werden. Es kann im Fall von drei Messpunkten der elektrische Widerstand und damit eine Temperatur zwischen dem ersten und dem zweiten Messpunkt bestimmt werden. Es kann der elektrische Widerstand und damit eine Temperatur zwischen dem zweiten Messpunkt und dem dritten Messpunkt bestimmt werden. Es kann der elektrische Widerstand und damit eine Temperatur zwischen dem ersten und dem dritten Messpunkt bestimmt werden. Da durch das Speisenthermometer mehrere verschiedene Temperaturen an verschiedenen Stellen während der Zubereitung einer Speise gemessen werden können, kann eine Speise verbessert zubereitet werden. Durch die Erfindung werden also Temperaturen während einer Speisenzubereitung räumlich aufgelöst ermittelt, um verbesserte Zubereitungsergebnisse erhalten zu können.

Umfasst das Speisenthermometer mehr als drei Messpunkte, so zum Beispiel wenigstens vier Messpunkte, so vervielfacht sich die Möglichkeit, ortsabhängig Temperaturen bestimmen zu können. Im Fall von vier Messpunkten kann eine Temperatur zwischen dem dritten und dem vierten Messpunkt ermittelt werden. Außerdem sind Kombinationen möglich wie die Messung des elektrischen Widerstands zwischen dem ersten und dem dritten Messpunkt und dem dritten Messpunkt und dem vierten Messpunkt nebst Temperaturbestimmung.

Die Zahl der Möglichkeiten vervielfältigt sich mit jedem weiteren Messpunkt. Entsprechend vielfältiger können Temperaturen während der Zubereitung einer Speise ermittelt werden, umso die Zubereitung einer Speise zu verbessern. Vorzugsweise umfasst ein Speisenthermometer daher wenigstens sechs Messpunkte, um sehr variabel Temperaturen in einer Speise und/oder in der Umgebung der Speise ermitteln zu können.

Für das Speisenthermometer wird nur eine Auswerteeinrichtung benötigt. Eine Auswertung kann variabel und dennoch einfach durchgeführt werden. Es kann ein Speisenthermometer mit einem sehr kleinen Durchmesser hergestellt werden. Dies ist von Vorteil, da ein Speisenthermometer mit geringem Durchmesser leicht in eine Speise gesteckt werden kann.

Das Speisenthermometer kann eine Auswerteelektronik umfassen, durch die ein gemessener elektrischer Widerstand in eine Temperatur umgerechnet wird. Beispielsweise können dann Temperaturen in Grad Celsius oder in Grad Fahrenheit an ein externes Gerät beispielsweise drahtlos übermittelt werden. Es kann aber auch der elektrische Widerstand bzw. eine gemessene Spannung oder eine gemessene Stromstärke unmittelbar als Maß für eine Temperatur dienen, beispielsweise um in Abhängigkeit davon eine Wärmezufuhr zu einer Speise automatisiert zu steuern.

Der elektrische Leiter des Speisenthermometers kann aus einem reinen Metall oder aus einer Metalllegierung bestehen. Reine Metalle zeigen stärkere temperaturabhängige Widerstandsänderungen als Metalllegierungen. Der elektrische Widerstand eines reinen Metalls hängt nahezu linear von der Temperatur ab. Reine Metalle sind daher als Material für den elektrischen Leiter im Vergleich zu Metalllegierungen zu bevorzugen. Für zuverlässige Messungen wird Platin bevorzugt, da dieses besonders wenig Alterungserscheinungen zeigt und das Material korrosionsbeständig ist. Es lassen sich daher daraus besonders zuverlässige und langlebige Speisenthermometer herstellen.

Der elektrische Leiter des Speisenthermometers kann aus einem Halbleiter bestehen, um die temperaturabhängige Änderung des elektrischen Widerstands im Vergleich zu Metallen und damit die Temperaturempfindlichkeit des Speisenthermometers zu vergrößern. Der elektrische Leiter des Speisenthermometers kann also aus einem halbleitenden Metalloxid bestehen. Der elektrische Leiter des Speisenthermometers kann aus Silizium bestehen.

Der elektrische Leiter kann ein NTC-Widerstand oder ein PTC-Widerstand sein. Bei einem NTC-Widerstand sinkt der Widerstandswert mit steigender Temperatur. Bei einem PTC-Widerstand steigt der Widerstandswert mit steigender Temperatur.

In einer Ausgestaltung ist ein Messpunkt ein aus Silber bestehender elektrischer Kontakt, der den elektrischen Leiter elektrisch kontaktiert. Der aus Silber bestehende elektrische Kontakt kann unmittelbar auf dem elektrischen Leiter aufgebracht sein, so zum Beispiel streifenförmig. Der Streifen des elektrischen Kontakts kann quer zur Längserstreckung des elektrischen Leiters verlaufen. Der elektrische Leiter kann ebenfalls streifenförmig sein, um vorteilhaft einen relativ großflächigen Kontakt zwischen dem elektrischen Kontakt und dem elektrischen Leiter zu erhalten.

Ein Streifen ist im Schnitt sehr viel breiter als hoch und sehr viel länger als breit. Ein Streifen kann beispielsweise wenigstens dreimal so hoch sein wie breit und beispielsweise wenigstens dreimal so lang wie breit. Der Querschnitt eines Streifens kann rechteckig sein. Die Hauptoberfläche eines Streifens kann rechteckig sein.

Silber weist vorteilhaft eine sehr hohe elektrische Leitfähigkeit auf und ist auch ansonsten gut den Anforderungen gewachsen. Mögliche Alternativen sind Metalle wie Kupfer, Gold oder Aluminium. Technisch zu bevorzugen ist allerdings Silber.

In einer Ausgestaltung der Erfindung ist der elektrische Leiter auf einem elektrisch isolierenden Träger aufgebracht oder in einen elektrisch isolierenden Träger eingebettet. Der elektrisch isolierende Träger dient der elektrischen Abschirmung des elektrischen Leiters gegenüber seiner Umgebung und zwar insbesondere gegenüber einer metallischen Umgebung. Das Trägermaterial kann beispielsweise ein keramisches Material sein.

Besteht die Hülle des Speisenthermometers aus einem elektrisch isolierenden Material, so kann der elektrische Leiter auch unmittelbar auf der Innenseite der Hülle aufgebracht sein. Ein zusätzlicher Träger aus elektrisch isolierendem Material ist dann nicht erforderlich. Mit Hülle ist eine äußere Wandung des Speisenthermometers gemeint, die die elektrischen Komponenten des Speisenthermometers von der Umgebung trennt. Mit "elektrische Komponente" sind auch elektronische Komponenten gemeint.

Die Form des Trägers kann so an eine Hülle des Speisenthermometers angepasst werden, dass erwünschte Wärmeübertragungen maximiert werden.

Die Form kann so gestaltet werden (z.B. spiralförmig oder zickzackförmig), dass eine räumliche Auflösung auch über den Umfang des Speisenthermometers möglich ist. Es kann dann verbessert ermittelt werden, von wo die Wärme ins Lebensmittel strömt. Auch kann verbessert auf die Größe des Garguts geschlossen werden. Dies gilt vor allem dann, wenn einem System umfassend das Speisenthermometer und ein Steuergerät oder Küchengerät mit einem Steuergerät bekannt ist, um welches Gargut es sich handelt. Es kann verbessert die Position des Speisenthermometers innerhalb einer Speise ermittelt werden. Dies gilt vor allem dann, wenn einem System umfassend das Speisenthermometer und ein Steuergerät oder Küchengerät mit einem Steuergerät bekannt ist, um welches Gargut es sich handelt und/oder wie groß bzw. wie schwer das Gargut ist.

Der Träger kann im Schnitt teilkreisförmig sein. Der Träger kann dann geeignet an einer Innenwand einer im Wesentlichen zylinderförmigen Hülle anliegen. Der Träger kann dann innerhalb einer dann vorzugsweise zylinderförmigen Hülle in einer stabilen Lage gehalten werden. Dies gilt insbesondere für den Fall, dass der Träger wenigstens halbkreisförmig ist.

Der Träger kann zusammen mit darauf befindlichen Komponenten in die Hülle hineingeschoben worden sein, um das Speisenthermometer technisch einfach herzustellen.

Der Träger kann eine Leiterplatte sein. Die Leiterplatte kann aus einem faserverstärkten Kunststoff bestehen. Auf der Leiterplatte befinden sich Leiterbahnen. Die Leiterbahnen sind mit der Leiterplatte fest verbunden. Leiterbahnen der Leiterplatte können elektrische Komponenten, beispielsweise elektronische Komponenten, des Speisenthermometers elektrisch miteinander verbinden. Eine elektrische Komponente im Sinne der vorliegenden Erfindung ist ein Bauteil, welches für seinen Betrieb mit elektrischem Strom versorgt wird. Eine elektrische Komponente kann beispielsweise eine Funkeinrichtung sein, die gemessene oder berechnete Daten des Speisenthermometers drahtlos an ein externes Gerät übermitteln kann. Eine elektrische Komponente kann ein integrierter Schaltkreis sein, mit dessen Hilfe Widerstände gemessen werden und/oder Temperaturen berechnet werden. Eine elektrische Komponente kann eine wiederaufladbare Batterie sein. Eine elektrische Komponente kann durch ein oder mehrere Lötverbindungen mit ein oder mehreren Leiterbahnen der Leiterplatte verbunden sein.

Eine Leiterbahn der Leiterplatte kann eine Antenne für eine Funkeinrichtung des Speisenthermometers sein. Die Antenne kann aber auch ein Draht sein, der unabhängig von Leiterbahnen der Leiterplatte auf die Leiterplatte aufgebracht worden ist.

Der elektrische Leiter, der mit Messpunkten versehen ist, kann spiralförmig oder zickzackförmig innerhalb des Speisenthermometers verlaufen, um verbessert Temperaturen räumlich aufgelöst ermitteln zu können. Es ist so verbessert möglich, einen Wärmefluss innerhalb einer Speise ermitteln zu können, um in Abhängigkeit davon die Zubereitung einer Speise verbessert steuern zu können.

Im Speisenthermometer können zwei elektrische Leiter vorhanden sein, die jeweils mit wenigstens drei Messpunkten, vorzugsweise mit wenigstens sechs Messpunkten, versehen sind. Es ist so verbessert möglich, einen Wärmefluss innerhalb einer Speise zu ermitteln, um in Abhängigkeit davon die Zubereitung einer Speise verbessert steuern zu können. Es können verbessert fehlerhafte Messwerte erkannt werden.

Die äußere Hülle des Speisenthermometers kann ganz oder überwiegend aus einem Metall bestehen, so zum Beispiel aus Edelstahl. Die Hülle kann aus Kunststoff oder einem Elastomer bestehende ein oder mehrere Bereiche umfassen. Ein solcher Bereich kann beispielsweise als Griff dienen. Die Hülle des Speisenthermometers kann im wesentlichen zylinderförmig sein. Der Querschnitt der Hülle ist dann entlang der Länge des Speisenthermometers zumindest überwiegend kreisförmig. Ein Ende des Speisenthermometers kann eine Spitze sein, um das Speisenthermometer leicht in eine Speise hineinstecken zu können. Die Hülle des Speisenthermometers kann stiftförmig sein. Der Querschnitt der Hülle des Speisenthermometers kann zumindest bereichsweise oder über die gesamte Länge eckig sein, so zum Beispiel dreieckig oder viereckig.

Der elektrische Leiter, der mit den Messpunkten versehen ist, kann im Schnitt teilkreisförmig sein. Vorzugsweise ist bei dieser Ausgestaltung die Hülle des Speisenthermometers zumindest im wesentlichen zylinderförmig. Die Form des elektrischen Leiters ist dann besonders gut an die Form der Hülle angepasst. Diese Ausgestaltung erlaubt eine kompakte Bauweise und eine technisch einfache Herstellung.

Ist das Speisenthermometer zumindest im wesentlichen zylinderförmig und/oder beispielsweise stiftförmig, so ist das Speisenthermometer langgestreckt. Eine langgestreckte Bauform ist zu bevorzugen, um besonders geeignet räumlich aufgelöst messen zu können. Das Speisenthermometer kann beispielsweise nicht länger als 30 cm, vorzugsweise nicht länger als 20 cm sein.

Das Speisenthermometer weist vorzugsweise ein spitzes Ende und damit eine Spitze auf. Im spitzen Ende und/oder beim spitzen Ende ist ein Energiespeicher vorhanden. Das spitze Ende dient dazu, in eine Speise hineingesteckt zu werden. Das Innere einer Speise wird zuletzt erhitzt. Daher wird ein Energiespeicher bei dieser Ausgestaltung besonders gut vor Hitze geschützt. Der Energiespeicher kann die genannte wiederaufladbare Batterie sein. Wiederaufladbare Batterien müssen regelmäßig besonders gut vor Hitze geschützt werden.

Vorzugsweise grenzt an den Energiespeicher eine Auswerteelektronik. Diese Anordnung erlaubt eine besonders bauraumsparende Bauweise. Die Auswerteelektronik kann den genannten integrierten Schaltkreis umfassen oder durch den genannten integrierten Schaltkreis gebildet sein.

Eine Ausgestaltung betrifft auch ein System mit einem erfindungsgemäßen Speisenthermometer und einem Küchengerät. Das Speisenthermometer und das Küchengerät sind so eingerichtet, dass das Küchengerät vom Speisenthermometer ermittelte Temperaturen auslesen und in Abhängigkeit von den ausgelesenen Temperaturen eine Zubereitung einer Speise steuern kann.

In einer Ausgestaltung ist das System so eingerichtet, dass es anhand eines ermittelten Temperaturverlaufs die Größe einer Speise bestimmen kann, wenn das Speisenthermometer bis zur Mitte der Speise in die Speise hineingesteckt worden ist. ein Benutzer kann beispielsweise dem System mitgeteilt haben, dass ein Steak zubereitet werden soll. Das System kann in Reaktion auf eine solche Eingabe den Benutzer beispielsweise über ein Display des Systems auffordern, das Speisenthermometer seitlich bis zur Mitte des Steaks hineinzustecken. Der Benutzer kann beispielsweise über eine Eingabetaste bestätigen, sobald er das Speisenthermometer seitlich bis zur Mitte des Steaks hineingesteckt hat. Ist dies geschehen, so kann das System die Größe des Fleischstücks bestimmen. Dies kann anfänglich regelmäßig deshalb geschehen, weil sich die Umgebungstemperatur in der Regel von der Temperatur im Inneren des Fleisches unterscheiden wird. Das Speisenthermometer ist also in der Lage, durch einen Temperatursprung eine Ausdehnung des Fleischstücks selbstständig festzustellen und damit eine Angabe über die Größe zu erhalten. Die Größe bzw. die Ausdehnung kann aber auch während der Zufuhr von Wärme ermittelt werden, weil sich die Temperatur im Inneren der Speise vergleichsweise langsam verändern wird und insbesondere anfänglich der Temperaturabfall innerhalb einer Speise relativ groß sein wird. Ein Temperaturfall außerhalb der Speise wird bestenfalls gering sein. Es kann daher eine Grenze ermittelt werden, die unmittelbar ein Maß für die Ausdehnung ist. Wird ein Speisenthermometer beispielsweise seitlich 7 cm in ein Steak gesteckt, so hat das Steak einen Durchmesser von ca. 14 cm, den das System dann ermitteln wird.

Die Bestimmung der Größe einer Speise wird in einer Ausgestaltung dazu genutzt, einen Garvorgang zu steuern. So kann sich die Größe einer Speise durch die Zubereitung verändern. Wird die Größe einer Speise während seiner Zubereitung kontinuierlich überwacht, so kann die Veränderung der Größe zur Steuerung der Zubereitung einer Speise in einer vorteilhaften Ausgestaltung genutzt werden. Ist dem System beispielsweise aufgrund von Referenzwerten bekannt, wie sehr sich die Größe einer Speise verändern wird, so kann bei Erreichen einer Zielgröße die Zufuhr von Wärme gestoppt werden. Bei Erreichen einer Zielgröße kann aber auch beispielsweise dem Benutzer mitgeteilt werden, dass noch 5 Minuten benötigt werden, um die Speise fertig zuzubereiten. Das System ermittelt in einer Ausgestaltung, wie weit das Speisenthermometer in eine Speise hineingesteckt worden ist. In Abhängigkeit davon kann ein Benutzer Anweisungen erhalten. So kann es erforderlich sein, dass eine Spitze eines Speisenthermometer möglichst kühl zu halten ist, weil sich im Bereich der Spitze temperaturempfindliche Bauteile des Speisenthermometers befinden. Ein Speisenthermometer kann durch eine Speise vergleichsweise kühl gehalten werden, weil das Innere einer Speise zuletzt erhitzt wird. Stellt das System fest, dass sich die Spitze nicht hinreichend weit innerhalb einer Speise befindet, um temperaturempfindliche Bauteile kühl halten zu können, so kann eine Handlungsanweisung des Systems an den Benutzer sein, das Speisenthermometer tiefer in eine Speise hinein zu stecken.

Das System ist in einer Ausgestaltung so eingerichtet ist, dass es anhand ermittelter Temperaturen abschätzen kann, welche Speise zubereitet wird. Beispielsweise verändert sich die Temperatur in einem Stück Fleisch anders als in einem Fisch, Wenn der Speisewärme von außen zugeführt wird. Anhand von Referenzdaten kann daher abgeschätzt werden, um welche Speise es sich handelt. Dies kann genutzt werden, um weiter verbessert automatisiert eine Speise zubereiten zu können. Ist dem System bekannt, welche Speise zubereitet wird, so kann beispielsweise ein Fettgehalt abgeschätzt werden, da auch ein Fettgehalt Einfluss auf einen Temperaturverlauf nimmt. Es können also Detailinformationen über eine Speise erhalten werden, die dazu beitragen können, eine Speise weiter verbessert zubereiten zu können.

Referenzwerte können in einer Datenbank gespeichert sein. Beispielsweise eine Küchenmaschine kann so eingerichtet sein, dass dieses mit dem Speisenthermometer beispielsweise drahtlos kommuniziert und Handlungsanweisungen gegebenenfalls an einen Benutzer ausgibt und/oder die Zubereitung einer Speise automatisiert steuert.

Die Erfindung betrifft auch ein Verfahren für eine Zubereitung einer Speise mit einem Speisenthermometer. Mithilfe des Speisenthermometers werden Temperaturen einer Speise räumlich aufgelöst bestimmt und in Abhängigkeit davon die Zubereitung der Speise gesteuert. Die Steuerung kann durch ein externes Gerät geschehen. Das externe Gerät kann ein reines Steuergerät, so zum Beispiel ein Computer sein. Das externe Gerät kann ein Küchengerät, so zum Beispiel eine Küchenmaschine sein. Das Küchengerät umfasst dann ein Steuergerät. Das externe Gerät kann beispielsweise zur Steuerung eine Wärmezufuhr zu einer Speise automatisiert regeln. Die Speise kann dann in dem externen Gerät erhitzt werden. Die Speise kann aber auch in einem anderen Küchengerät erhitzt werden. Das externe Gerät kann dann beispielsweise das Erhitzen durch das andere Küchengerät steuern. Das externe Gerät kann beispielsweise zur Steuerung der Speisenzubereitung Handlungsanweisungen an einen Benutzer ausgeben, wie beispielsweise eine Wärmezufuhr einzustellen und/oder zu ändern ist.

Eine Küchenmaschine ist ein Gerät mit einem Basisteil und einem Speisenzubereitungsgefäß, das eine Speise zumindest durch ein im Speisenzubereitungsgefäß befindliches Mischwerkzeug mischen kann. Im Basisteil kann sich ein Motor für ein Antreiben des Mischwerkzeugs befinden. Das Speisenzubereitungsgefäß kann von dem Basisteil gelöst werden. Vorzugsweise kann die Küchenmaschine eine Speise, die sich im Speisenzubereitungsgefäß befindet, mithilfe einer integrierten Waage wiegen und/oder mithilfe einer Heizeinrichtung erhitzen. Die Heizeinrichtung kann in das Speisenzubereitungsgefäß integriert sein und über das Basisteil mit elektrischem Strom versorgt werden.

Vorzugsweise wird die Temperatur bestimmt, indem durch einen elektrischen Leiter mit wenigstens drei Messpunkten des Speisenthermometers ein konstanter elektrischer Strom fließt. Für eine Ermittlung einer Temperatur wird die elektrische Spannung zwischen zwei Messpunkten gemessen. In den der Stromfluss konstant gehalten wird, verändert sich die Temperatur des elektrischen Leiters nicht aufgrund eines sich ändernden elektrischen Stroms. Dadurch wird die Messgenauigkeit verbessert.

Vorzugsweise werden Temperaturen räumlich aufgelöst nacheinander ermittelt. Dies kann getaktet mit Abständen im Millisekundenbereich zwischen zwei Messungen stattfinden. Der apparative Aufwand kann dadurch geringgehalten werden. Sind sehr viele Messpunkte vorhanden, so zum Beispiel wenigstens sechs Messpunkte, ist diese Ausgestaltung von besonderem Vorteil.

Um die Genauigkeit zu erhöhen, kann ein Mittelwert aus mehreren Messwerten gebildet werden. Das Speisenthermometer ist insbesondere so eingerichtet, dass ausgewählt werden kann, zwischen welchen Messpunkten eine Messung durchgeführt werden soll. Wird ein Steak zubereitet, so ist es von besonderem Interesse, mit hoher räumlicher Auflösung die Temperatur messen zu können. Es wird dann beispielsweise eine jede Spannung gemessen, die zwischen unmittelbar aneinander angrenzenden Messpunkten auftritt. Wird dagegen ein Braten in einem Ofen zubereitet, so genügt eine geringere räumliche Auflösung. In diesem Fall kann das Speisenthermometer in einen Modus gehen, bei dem die Spannung nicht zwischen zwei Messpunkten gemessen wird, die unmittelbar aneinander angrenzen. Stattdessen kann beispielsweise ein Messpunkt übersprungen werden. Dadurch können die Zahl der Messungen und die Zahl der Übertragungen an ein externes Gerät verringert werden, was den Stromverbrauch reduziert und daher beispielsweise eine Verlängerung der Batterielaufzeit eines Speisenthermometers ermöglicht. In einer Ausgestaltung der Erfindung kann also die räumliche Auflösung des Speisenthermometers geändert werden. Dies kann in einer Ausgestaltung der Erfindung automatisiert in Abhängigkeit von der Speise geschehen, die zubereitet werden soll.

Die Möglichkeit, räumlich aufgelöste Temperaturwerte innerhalb einer Speise mithilfe eines Speisenthermometers ermitteln zu können, kann dazu genutzt werden, um die exakte Position des Speisenthermometers in einem Lebensmittel bestimmen zu können. Dies kann beispielsweise durch Abgleich mit Referenzwerten geschehen, die in einer Datenbank gespeichert sein können. Ist eine Position in einer Speise ermittelt worden, so kann dies beispielsweise dazu genutzt werden, um über ein externes Gerät Anweisungen auszugeben, ob ein Speisenthermometer beispielsweise tiefer in die Speise hineingesteckt werden soll oder nicht. Die Ermittlung der genauen Position kann auch dazu genutzt werden, um die Speisenzubereitung verbessert zu steuern. Ist eine Position ermittelt worden, so ist dann auch bekannt, welche Temperatur in der Mitte einer Speise herrscht. Es kann damit sehr genau ein gewünschter Zielwert in der Mitte einer Speise angesteuert werden.

Durch ein solches Speisenthermometer, welches ortsaufgelöst eine Vielzahl von Temperaturen ermitteln kann, kann eine Temperaturverteilung in einer Speise bestimmt werden. Es ist dadurch verbessert möglich, eine Ist-Temperaturverteilung in einer Speise mit einer Soll-Temperaturverteilung einer solchen Speise zu vergleichen und in Abhängigkeit davon die Zufuhr von Wärme zur Speise zu steuern oder durch einen Benutzer einstellen zu lassen. Die Soll-Temperaturverteilung kann in einer Datenbank gespeichert sein.

Abweichungen und Fehler vor und während der Speisenzubereitung können folglich verbessert detektiert und/oder behoben werden. Ist beispielsweise die Spitze eines Speisenthermometers wärmer als ein mittlerer Bereich des Speisenthermometers, so kann dies bedeuten, dass das Speisenthermometer fehlerhaft in eine Speise hineingesteckt worden ist. Es kann beispielsweise detektiert werden, ob ein Wärmeeintrag in eine Speise von zwei Seiten erfolgt wie zum Beispiel in einem Ofen durch Ober- und Unterhitze oder aber nur von einer Seite wie bei einer Pfanne. Auch ein solches Messergebnis kann genutzt werden, um Fehler während einer Zubereitung zu erkennen. Wird eine ungleiche Temperaturverteilung ermittelt, die nicht symmetrisch ist, so kann dies auf einen Fehler während einer Zubereitung hindeuten. Durch die Erfindung kann beispielsweise verbessert ein Steak hergestellt werden, welches überall Medium sein soll und nicht lediglich im Kern. Es kann beispielsweise gesteuert werden, zu welchem Zeitpunkt ein Benutzer ein Steak in einer Pfanne wenden soll.

Um eine Speise gemäß gewünschter Weise verbessert zuzubereiten, kann auch ein nicht unter den Schutzumfang der angehängten Ansprüche fallendes Speisenthermometer eingesetzt sein, das auf alternative Weise eine Vielzahl von Temperaturen, und zwar wenigstens drei Temperaturen, vorzugsweise wenigstens sechs Temperaturen, räumlich aufgelöst messen kann. Um dies zu erreichen, kann ein Speisenthermometer beispielsweise in Reihe geschaltete Dioden mit temperaturabhängigen p-n-Übergängen umfassen. Beschriebene Möglichkeiten, wie ein Speisenthermometer genutzt werden kann, um eine Speise verbessert herzustellen, sind also nicht auf den Einsatz eines Speisenthermometers beschränkt, das ein Widerstandsthermometer ist. Das erfindungsgemäße Widerstandsthermometer weist aber gegenüber anderen technischen Realisierungen u. a. Fertigungsvorteile auf und ist daher zu bevorzugen.

Nachfolgend wird die Erfindung anhand von Beispielen näher erläutert.

Es zeigen
- Figur 1:: stiftförmiges Speisenthermometer während einer Speisenzubereitung;
- Figur 2:: Träger mit elektrischem Leiter und Messpunkten;
- Figur 3:: Speisenthermometer mit halbkreisförmigem Träger;
- Figur 4:: Schnitt durch ein Speisenthermometer mit halbkreisförmigem Träger;
- Figur 5:: Speisenthermometer mit langgestrecktem Träger;
- Figur 6:: Schnitt durch ein Speisenthermometer aus Figur 5;
- Figur 7:: Speisenthermometer mit zwei langgestreckten Trägern;
- Figur 8:: Speisenthermometer mit einem spiralförmigen Verlauf eines Trägers;
- Figur 9:: Speisenthermometer mit Antenne, Auswerteelektronik und Akku gemäß erster Ausführungsform;
- Figur 10:: Speisenthermometer mit Antenne, Auswerteelektronik und Akku gemäß zweiter Ausführungsform.

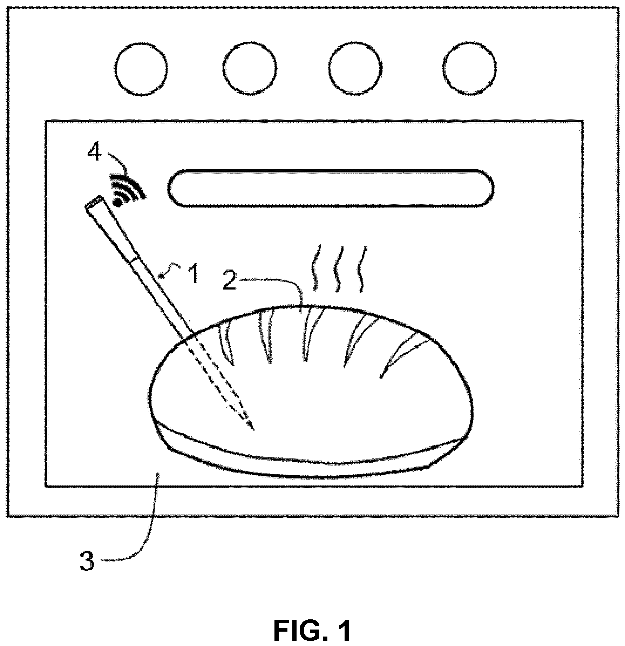

Die Figur 1 zeigt ein stiftförmiges Speisenthermometer 1, welches mit seiner Spitze in einen Brotteig 2 hineingesteckt ist. Der Brotteig 2 befindet sich in einem Backofen 3 und wird erhitzt. Das Speisenthermometer 1 bestimmt räumlich aufgelöst Temperaturen und übermittelt diese ermittelten Temperaturen durch eine Funkeinheit 4 an ein externes Gerät. Durch das externe Gerät wird die Brotzubereitung gesteuert. Dies kann durch eine unmittelbare Steuerung der Temperatur des Backofens geschehen oder aber durch Anweisungen an einen Benutzer, wie die Temperatur des Backofens, die Art der Temperaturzuführung und / oder die Anordnung des Brots innerhalb des Backofens zu verändern ist. Mit Art der Temperaturzuführung sind Auswahlmöglichkeiten wie Oberhitze, Unterhitze oder Umluft gemeint. Mit Anordnung ist gemeint, wo im Backofen sich das Brot befinden soll.

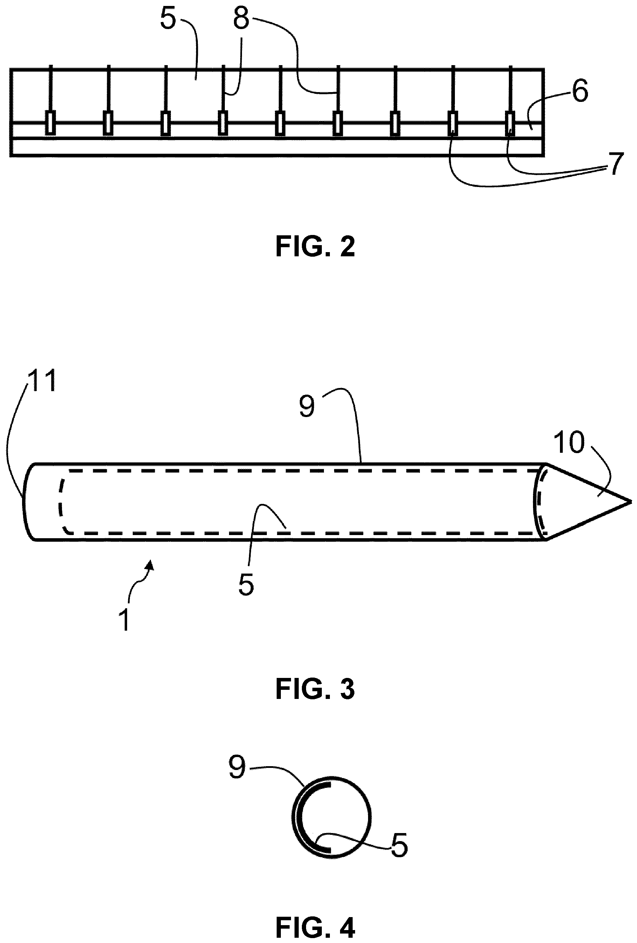

Die Figur 2 zeigt einen Träger 5 eines Speisenthermometers 1, auf den ein elektrischer Leiter 6 aufgebracht ist. Der Träger 5 besteht aus einem elektrisch isolierenden Material. Der Träger 5 kann aus keramischem Material und damit hitzebeständigem Material bestehen. Es kann sich um eine Kunststoffplatte handeln. Der elektrische Leiter 6 verläuft in der Form eines Streifens. Der elektrische Leiter 6 kann aus amorphem Silizium bestehen. Auf dem elektrischen Leiter 6 ist eine Mehrzahl streifenförmiger elektrischer Kontakte 7 als Messpunkte aufgebracht. Die elektrischen Kontakte 7 können aus Silber bestehen. Die streifenförmigen elektrischen Kontakte 7 können wie dargestellt quer zum elektrischen Leiter 6 verlaufen. Ein relativ großflächiger elektrischer Kontakt besteht dann zwischen einem jeden elektrischen Kontakt 7 und dem elektrischen Leiter 6. Elektrische Verbindungsleiter 8 verbinden die beispielsweise aus Silber bestehenden elektrischen Kontakte 7 mit einem Strommessgerät des Speisenthermometers. Die elektrischen Verbindungsleiter 8 bestehen ebenfalls aus einem elektrisch gut leitenden Material wie beispielsweise Silber. Elektrische Widerstände des elektrischen Leiters 6 können so abschnittsweise ermittelt werden. Dies ermöglicht es, ortsaufgelöst, also räumlich aufgelöst, Temperaturen bestimmen zu können. Die Struktur des elektrischen Leiters 6 und die Materialauswahl kann an den gewünschten Temperaturbereich und die gewünschte Messgenauigkeit angepasst worden sein. Bei der Auswahl des Materials des Trägers 5 wird vorzugsweise auf eine gute Wärmeleitfähigkeit geachtet, um herrschende Temperaturen schnell ermitteln zu können.

Der Träger 5 kann klein und am Rand einer Hülle des Speisenthermometers 1 angeordnet sein, damit genügend Platz zur Unterbringung der Energieversorgung und der Auswerteelektronik und Kommunikationstechnik vorhanden ist. Als Energieversorger kann ein Energiespeicher wie Akku, also wiederaufladbare Batterie, oder Superkondensator vorgesehen sein. Als Energieversorger kann ein Energiewandler wie beispielsweise ein Nanogenerator eingesetzt sein.

Die Figur 3 zeigt ein Ausführungsbeispiel eines Speisenthermometers 1, dessen Hülle einen hohlförmigen Zylinder 9 und ein hohles spitzes Ende 10 umfasst. Durch das Ende 11 des Zylinders 9, welches dem spitzen Ende 10 gegenüberliegt, kann ein Träger 5 mit darauf aufgebrachten, nicht dargestellten elektrischen Komponenten in den Zylinder 10 hineingeschoben worden sein. Nach dem Hineinschieben kann das Ende 11 durch einen Verschluss verschlossen worden sein. Das Ende 11 kann dann ein stumpfes Ende sein. Der Träger 5 kann in etwa gleich lang wie das Speisenthermometer 1 oder gleich lang wie der Zylinder 9 sein. Der Träger 5 kann aber auch deutlich kürzer als der Zylinder 9 sein. Das spitze Ende 10 kann aus Stabilitätsgründen aus Metall bestehen. Der Zylinder 9 besteht vorzugsweise zumindest überwiegend aus Metall, um aus einem gut wärmeleitenden, stabilen Material zu bestehen. Beim Ende 11 kann es einen aus Kunststoff bestehenden Bereich geben, der als Griff dient.

Die Figur 4 zeigt durch eine Schnittdarstellung, dass der Träger 5 aus Figur 3 im Schnitt halbkreisförmig sein kann. Der Außendurchmesser der Halbkreisform entspricht wie in der Figur 4 gezeigt vorteilhaft dem Innendurchmesser des Zylinders 9. Dies trägt dazu bei, dass der Träger 5 innerhalb des Speisenthermometers 1 stabil gehalten werden kann, ohne dafür einen großen technischen Aufwand betreiben zu müssen. Der Träger 5 kann beispielsweise leicht klemmend gehalten sein. Durch eine Halbkreisform kann der auf dem Träger befindliche elektrische Leiter ebenfalls halbkreisförmig sein. Durch die relativ großen Flächen kann ein stabiles Signal erhalten werden. Die innen liegende Oberfläche der Halbkreisform des Trägers 5 kann genutzt werden, um Komponenten wie Auswerteelektronik auf dem Träger zusätzlich zu dem elektrischen Leiter aufzubringen.

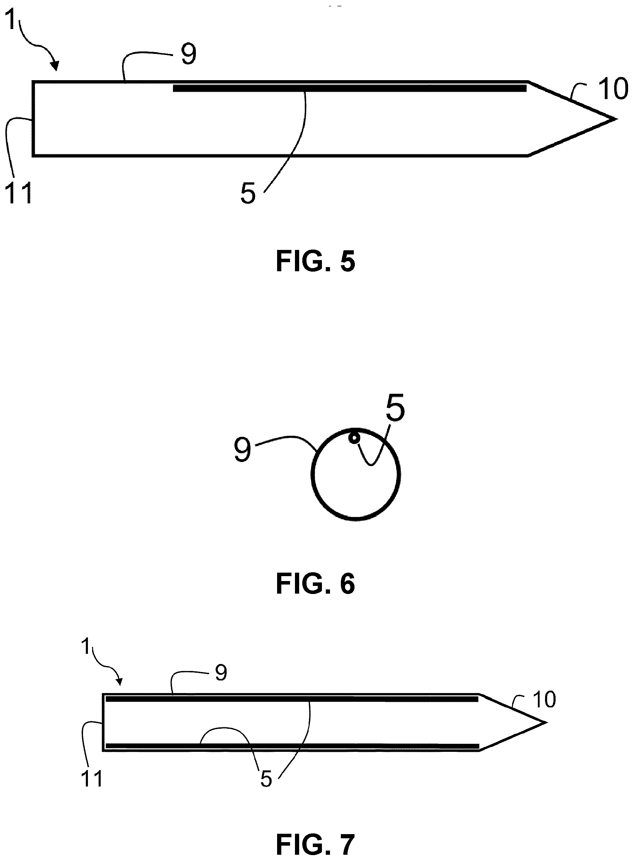

Die Figur 5 zeigt ein Ausführungsbeispiel eines Speisenthermometers 1, dessen Hülle einen hohlförmigen Abschnitt 9 und ein hohles spitzes Ende 10 umfasst. An einer Innenwand des hohlförmigen Abschnitts 9 kann ein langgestreckter Träger 5 angebracht sein, der wie in der Figur 6 gezeigt im Schnitt kreisförmig sein kann. Im Schnitt kann der Träger 5 aber auch eckig sein, so zum Beispiel rechteckig oder quadratisch. Ein elektrischer Leiter mit wenigstens drei Messstellen kann innerhalb des langgestreckten Trägers 5 sein, also in den Träger 5 integriert sein, oder an einer Oberfläche des langgestreckten Trägers angebracht sein.

Die in der Figur 7 gezeigte Ausführungsform eines Speisenthermometers 1 unterscheidet sich von der in der Figur 5 gezeigten Ausführungsform durch das Vorsehen von zwei lang gestreckten Trägern 5, die in etwa gleich lang sind wie der hohlförmige Abschnitt 9. Die beiden Träger 5 sind an gegenüberliegenden Seiten der Innenwand des hohlförmigen Abschnitts 9 befestigt. Durch auf den beiden Trägern 5 befindliche weitere Komponenten des Speisenthermometers 1 können unabhängig voneinander Temperaturen an gegenüberliegenden Seiten des Speisenthermometers 1 gemessen werden. Durch das Vorsehen von zwei Trägern 5 mit darauf befindlichen elektrischen Leitern können Messfehler minimiert werden und/oder Messfehler detektiert werden. Im Schnitt können die Träger 5 beispielsweise rund, eckig oder teilkreisförmig sein. Es kann auch der eine Träger 5 im Schnitt rund oder eckig und der andere Träger 5 im Schnitt eckig oder teilkreisförmig sein. Auf beiden Trägern kann jeweils ein elektrischer Leiter mit wenigstens drei Messpunkten aufgebracht sein, um Temperaturen räumlich aufgelöst ermitteln zu können. Nur auf einem der beiden Träger können weitere Komponenten wie Auswerteelektronik aufgebracht sein, um ein zuverlässig arbeitendes Speisenthermometer mit kleinem Bauraum herstellen zu können.

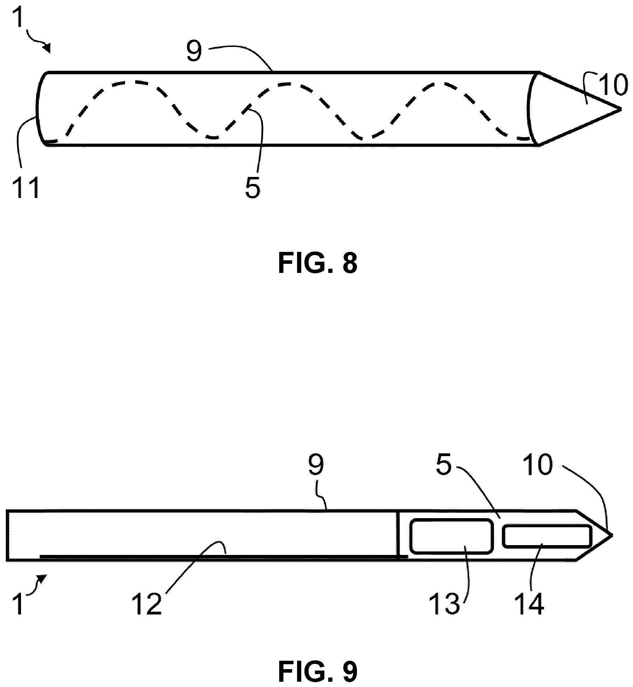

Die Figur 8 zeigt ein Speisenthermometer 1 mit einem spiralförmigen Verlauf des Trägers 5. Entsprechend kann der auf dem Träger 5 befindliche elektrische Leiter mit den wenigstens drei Messpunkten ebenfalls spiralförmig verlaufen. Hierdurch können auch über den Umfang des Speisenthermometers 1 verteilt Temperaturen räumlich aufgelöst gemessen werden.

Die Figur 9 zeigt ein Speisenthermometer 1 mit einem Träger 5, der im Querschnitt wie in der Figur 4 gezeigt halbkreisförmig sein kann. Der Träger 5 kann eine Verlängerung mit einer Antenne 12 umfassen. Die Verlängerung muss im Querschnitt nicht halbkreisförmig sein. Die Verlängerung kann die Antenne 12 mechanisch stabilisieren. Die Antenne 12 reicht in den Bereich des Speisenthermometers 1 hinein, der grundsätzlich nicht durch eine Speise während der Zubereitung gekühlt werden kann. Dies ist unproblematisch möglich, weil eine Antenne grundsätzlich nicht temperaturempfindlich ist. An dem Träger 5 kann eine Auswerteelektronik 13 mit einer drahtlosen Send- und Empfangseinheit angebracht sein. Die Auswerteelektronik 13 kann unmittelbar auf dem Träger 5 aufgebracht sein. Die Auswerteelektronik 13 kann aber auf einer separaten Platte ausgebracht sein. Enden der Platte können an dem Träger 5 befestigt sein. Benachbart zur Auswerteelektronik 13 kann eine wiederaufladbare Batterie bzw. ein Akku 14 vorhanden sein. Der Akku 14 kann im Schnitt kreisrund sein, so dass ein handelsüblicher Akku eingesetzt sein kann. Die Halbkreisform des Trägers 5 kann an die Außenseite des Akkus 14 angepasst sein, um den Akku 14 einfach und sicher halten zu können. Der Akku 14 kann wie gezeigt in die Spitze 10 des Speisenthermometers 1 hineinreichen und damit in einen Bereich, der durch eine Speise gekühlt werden kann.

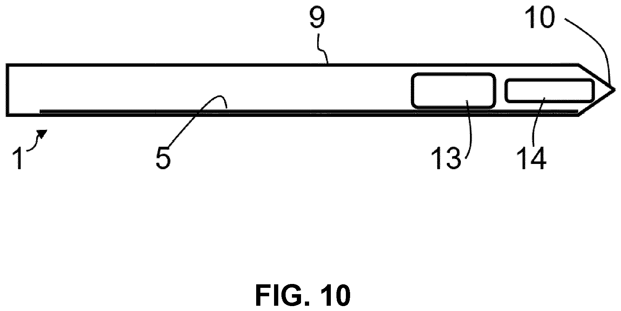

Die in der Figur 10 gezeigte Ausführungsform unterscheidet sich von der in der Figur 9 gezeigten Ausführungsform durch die Struktur des Trägers 5, der ausschließlich lang gestreckt ist. In den Träger 5 kann wie aus der Figur 9 bekannt eine Antenne integriert sein.

## Patentansprüche

1. Speisenthermometer (1), wobei das Speisenthermometer (1) ein Widerstandsthermometer mit einem elektrischen Leiter (6) ist, wobei wenigstens drei Messpunkte (7) für den elektrischen Leiter (6) vorhanden sind, vorzugsweise wenigstens sechs Messpunkte (7), **dadurch gekennzeichnet, dass** jeder Messpunkt (7) einen elektrischen Kontakt zum elektrischen Leiter (6) herstellt, so dass der elektrische Widerstand des elektrischen Leiters (6) zwischen zwei Messpunkten (7) ermittelt wird, wobei der elektrische Widerstand von der Temperatur abhängt.

2. Speisenthermometer (1) nach dem vorhergehenden Anspruch, **dadurch gekennzeichnet, dass** der elektrische Leiter (6) aus einem Halbleiter, vorzugsweise aus amorphem Silizium, gebildet ist.

3. Speisenthermometer (1) nach einem der vorhergehenden Ansprüche, **dadurch gekennzeichnet, dass** ein jeder Messpunkt einen aus Silber bestehenden elektrischen Kontakt (7) umfasst, der den elektrischen Leiter (6) elektrisch kontaktiert.

4. Speisenthermometer (1) nach einem der vorhergehenden Ansprüche, **dadurch gekennzeichnet, dass** das Speisenthermometer einen Träger (5) aus elektrisch isolierendem Material umfasst und der elektrische Leiter (6) auf dem Träger (5) aufgebracht ist.

5. Speisenthermometer (1) nach dem vorhergehenden Anspruch, **dadurch gekennzeichnet, dass** das Speisenthermometer (1) eine Hülle (9) aufweist und der Träger (5) die Hülle (9) ist oder der Träger (5) auf die Innenwand der Hülle (9) aufgebracht ist.

6. Speisenthermometer (1) nach einem der zwei vorhergehenden Ansprüche, **dadurch gekennzeichnet, dass** der Träger (5) im Schnitt teilkreisförmig ist.

7. Speisenthermometer (1) nach einem der drei vorhergehenden Ansprüche, **dadurch gekennzeichnet, dass** der Träger (5) eine Leiterplatte ist, die elektrische Komponenten des Speisenthermometers (1) elektrisch miteinander verbindet und/oder umfasst.

8. Speisenthermometer (1) nach einem der vier vorhergehenden Ansprüche, **dadurch gekennzeichnet, dass** das Speisenthermometer (1) eine Funkeinrichtung (4) umfasst und eine Antenne (12) der Funkeinrichtung (4) auf dem Träger (5) aufgebracht ist.

9. Speisenthermometer (1) nach einem der vorhergehenden Ansprüche, **dadurch gekennzeichnet, dass** der elektrische Leiter (6) spiralförmig innerhalb des Speisenthermometers (1) verläuft.

10. Speisenthermometer (1) nach einem der vorhergehenden Ansprüche, **dadurch gekennzeichnet, dass** zwei elektrische Leiter (6) vorhanden sind und für jeden elektrischen Leiter (6) wenigstens drei Messpunkte (7), vorzugsweise wenigstens sechs Messpunkte (7), vorhanden sind.

11. System mit einem Speisenthermometer (1) nach einem der vorhergehenden Ansprüche und einem Küchengerät, wobei das Speisenthermometer (1) und das Küchengerät so eingerichtet sind, dass das Küchengerät vom Speisenthermometer (1) ermittelte Temperaturen auslesen und in Abhängigkeit von den ausgelesenen Temperaturen eine Zubereitung einer Speise steuern kann.

12. Verfahren für eine Zubereitung einer Speise mit einem Speisenthermometer, bei dem mithilfe eines Speisenthermometers (1) Temperaturen einer Speise räumlich aufgelöst bestimmt werden und in Abhängigkeit davon die Zubereitung der Speise gesteuert wird, **dadurch gekennzeichnet, dass** das Speisenthermometer (1) gemäß einem der Ansprüche 1 bis 10 ausgestaltet ist.

13. Verfahren nach dem vorhergehenden Anspruch, **dadurch gekennzeichnet, dass** die Temperatur bestimmt wird, indem durch einen elektrischen Leiter (6) mit wenigstens drei Messpunkten (7) des Speisenthermometers (1) ein konstanter elektrischer Strom fließt und für eine Ermittlung einer Temperatur die elektrische Spannung zwischen zwei Messpunkten (7) gemessen wird.

14. Verfahren nach einem der zwei vorhergehenden Ansprüche, **dadurch gekennzeichnet, dass** nacheinander Temperaturen räumlich aufgelöst ermittelt werden.

15. Verfahren nach einem der drei vorhergehenden Ansprüche, **dadurch gekennzeichnet, dass** die Position des Speisenthermometers (1) innerhalb einer Speise ermittelt wird.

## Claims

1. Food thermometer (1), wherein the food thermometer (1) is a resistance thermometer with an electrical conductor (6), wherein at least three measuring points (7) for the electrical conductor (6) are present, preferably at least six measuring points (7), **characterized in that** each measuring point (7) makes electrical contact with the electrical conductor (6), so that the electrical resistance of the electrical conductor (6) between two measuring points (7) is determined, wherein the electrical resistance depends on the temperature.

2. Food thermometer (1) according to the preceding claim, **characterized in that** the electrical conductor (6) is formed of a semiconductor, preferably of amorphous silicon.

3. Food thermometer (1) according to one of the preceding claims, **characterized in that** each measuring point comprises an electrical contact (7) consisting of silver, which electrically contacts the electrical conductor (6).

4. Food thermometer (1) according to one of the preceding claims, **characterized in that** the food thermometer comprises a support (5) of electrically insulating material and the electrical conductor (6) is applied to the support (5).

5. Food thermometer (1) according to the preceding claim, **characterized in that** the food thermometer (1) has a sheath (9) and the support (5) is the sheath (9) or the support (5) is applied to the inner wall of the sheath (9).

6. Food thermometer (1) according to one of the two preceding claims, **characterized in that** the support (5) is part-circular in section.

7. Food thermometer (1) according to one of the three preceding claims, **characterized in that** the support (5) is a printed circuit board which electrically interconnects and/or comprises electrical components of the food thermometer (1).

8. Food thermometer (1) according to one of the four preceding claims, **characterized in that** the food thermometer (1) comprises a radio device (4) and an antenna (12) of the radio device (4) is applied to the support (5).

9. Food thermometer (1) according to one of the preceding claims, **characterized in that** the electrical conductor (6) runs spirally inside the food thermometer (1).

10. Food thermometer (1) according to one of the preceding claims, **characterized in that** two electrical conductors (6) are present and for each electrical conductor (6) at least three measuring points (7), preferably at least six measuring points (7), are present.

11. System comprising a food thermometer (1) according to one of the preceding claims and a kitchen appliance, wherein the food thermometer (1) and the kitchen appliance are configured such that the kitchen appliance is able to read temperatures determined by the food thermometer (1) and control a preparation of a food in dependence on the read temperatures.

12. Method for preparing a food with a food thermometer (1), **characterized in that** temperatures of a food are determined in a spatially resolved manner by means of a food thermometer (1) and the preparation of the food is controlled in dependence thereon, **characterized in that** the food thermometer is designed according to one of the claims 1 to 10.

13. Method according to the preceding claim, **characterized in that** the temperature is determined by flowing a constant electric current through an electric conductor (6) with at least three measuring points (7) of the food thermometer (1) and measuring the electric voltage between two measuring points (7) for a determination of a temperature.

14. Method according to one of the two preceding claims, **characterized in that** temperatures are determined in a spatially resolved manner one after the other.

15. Method according to one of the three preceding claims, **characterized in that** the position of the food thermometer (1) within a food is determined.

## Revendications

1. Thermomètre à aliments (1), dans lequel le thermomètre à aliments (1) est un thermomètre à résistance avec un conducteur électrique (6), dans lequel au moins trois points de mesure (7) sont prévus pour le conducteur électrique (6), de préférence au moins six points de mesure (7), **caractérisé en ce que** chaque point de mesure (7) établit un contact électrique avec le conducteur électrique (6), de sorte que la résistance électrique du conducteur électrique (6) entre deux points de mesure (7) est déterminée, dans lequel la résistance électrique dépend de la température.

2. Thermomètre à aliments (1) selon la revendication précédente, **caractérisé en ce que** le conducteur électrique (6) est formé d'un semi-conducteur, de préférence de silicium amorphe.

3. Thermomètre à aliments (1) selon l'une des revendications précédentes, **caractérisé en ce que** chaque point de mesure comprend un contact électrique (7) en argent qui est en contact électrique avec le conducteur électrique (6).

4. Thermomètre à aliments (1) selon l'une des revendications précédentes, **caractérisé en ce que** le thermomètre à aliments comprend un support (5) en matériau électriquement isolant et le conducteur électrique (6) est appliqué sur le support (5).

5. Thermomètre à aliments (1) selon la revendication précédente, **caractérisé en ce que** le thermomètre à aliments (1) présente une enveloppe (9) et le support (5) est l'enveloppe (9) ou le support (5) est appliqué sur la paroi intérieure de l'enveloppe (9).

6. Thermomètre à aliments (1) selon l'une des deux revendications précédentes, **caractérisé en ce que** le support (5) est en forme de cercle partiel en coupe.

7. Thermomètre à aliments (1) selon l'une des trois revendications précédentes, **caractérisé en ce que** le support (5) est une carte de circuit imprimé qui relie électriquement des composants électriques du thermomètre à aliments (1) entre eux et/ou en comprend.

8. Thermomètre à aliments (1) selon l'une des quatre revendications précédentes, **caractérisé en ce que** le thermomètre à aliments (1) comprend un dispositif radio (4) et une antenne (12) du dispositif radio (4) est appliquée sur le support (5).

9. Thermomètre à aliments (1) selon l'une des revendications précédentes, **caractérisé en ce que** le conducteur électrique (6) s'étend en forme de spirale à l'intérieur du thermomètre à aliments (1).

10. Thermomètre à aliments (1) selon l'une des revendications précédentes, **caractérisé en ce qu'**il y a deux conducteurs électriques (6) et pour chaque conducteur électrique (6), il y a au moins trois points de mesure (7), de préférence au moins six points de mesure (7).

11. Système comprenant un thermomètre à aliments (1) selon l'une des revendications précédentes et un appareil de cuisine, dans lequel le thermomètre à aliments (1) et l'appareil de cuisine sont configurés de telle sorte que l'appareil de cuisine peut lire des températures déterminées par le thermomètre à aliments (1) et commander une préparation d'un aliment en fonction des températures lues.

12. Procédé pour une préparation d'un aliment avec un thermomètre à aliments, dans lequel des températures d'un aliment sont déterminées de manière résolue dans l'espace à l'aide d'un thermomètre à aliments (1) et en fonction de cela est commandé la préparation de l'aliment, **caractérisé en ce que** le thermomètre à aliments (1) est conçu selon l'une des revendications 1 à 10.

13. Procédé selon la revendication précédente, **caractérisé en ce que** la température est déterminée en faisant circuler un courant électrique constant dans un conducteur électrique (6) comportant au moins trois points de mesure (7) du thermomètre à aliments (1) et pour une détermination d'une température la tension électrique entre deux points de mesure (7) est mesurée.

14. Procédé selon l'une des deux revendications précédentes, **caractérisé en ce que** les températures sont déterminées successivement de manière résolue dans l'espace.

15. Procédé selon l'une des trois revendications précédentes, **caractérisé en ce que** la position du thermomètre à aliments (1) est déterminée à l'intérieur d'un aliment.
